# EUROPEAN PATENT APPLICATION

(11) **EP 1 700 667 A1**
(43) Date of publication of application: **13.09.2006**
(21) Application number: 06003795.9
(22) Date of filing: 24.02.2006
(51) Int. Cl.: B23K 26/10, G05B 19/42, B25J 9/16

(54) **Laser-welding teaching device and method**

(30) Priority: 09.03.2005 JP 2005065177
(71) Applicant: FANUC LTD, Minamitsuru-gun, Yamanashi 401-0597 (JP)
(72) Inventor: Nagatsuka, Yoshiharu FANUC Dai3virakaramatsu, Minamitsuru-gun Yamanashi 401-0511 (JP); Furuya, Yoshitake FANUC Dai3virakaramatsu, Minamitsuru-gun Yamanashi 401-0511 (JP)
(74) Representative: Thum, Bernhard

(57) **Abstract**

A laser welding teaching device (10), and a teaching method, for simplifying the teaching of the motion of a scanner (20) and for reducing a welding operation time by a welding robot (12). The laser welding teaching device (10) is connected to a robot control device (14) for controlling the welding robot (12) for welding a workpiece (W) and sends a command to the robot control device (14). A laser oscillator (18) is connected to a work tool (16) of the robot and a laser scanner (20) is mounted on the work tool (16). By using the laser scanner (20) capable of moving at high-speed, the motion of the robot during the air cut motion may be greatly reduced, resulting in a significant reduction of the cycle time of the whole system.

## Description

### BACKGROUND OF THE INVENTION

### 1. Field of the Invention

The present invention relates to a laser-welding teaching device, and a teaching method, for teaching a welding operation to a robot.

### 2. Description of the Related Art

In general, a welding operation using a robot is carried out while the robot is moving. When a plurality of sites are to be welded, the robot must move between each of the sites. In the welding operation using the robot, it is desired reduce the distance of movement of the robot or the air cut time as much as possible, in order to reduce a total operation time. For example, Japanese Unexamined Patent Publication No. 2001-222309 discloses a robot control device, of a regenerative teaching type, provided with a means for identifying a work section and a means for automatically stopping the operation in the work section, whereby the movement of the robot may be made efficient.

In the air cut motion in the prior art, a method including moving a TCP (Tool Center Point) of the robot is generally used. In this method, however, it takes a time to move the TCP when each site to be welded is considerably distant from another, resulting in a long total welding-operation time.

### SUMMARY OF THE INVENTION

Accordingly, it is an object of the present invention to provide a teaching device and a teaching method capable of simplifying teaching of a laser scanner and of reducing the welding operation time of the robot.

To this end, according to one aspect of the present invention, there is provided a laser welding teaching device for making a motion program for the laser scanner and a robot in a laser welding system, the laser scanner being capable of controlling an irradiating direction of a laser beam and the robot being capable of changing the position and the orientation of the laser scanner mounted on the robot, the teaching device comprising: a displaying part for indicating models of a workpiece to be welded and the laser scanner; a welding line specifying part for specifying a plurality of welding lines on the model of the workpiece; a grouping part for classifying the plurality of welding lines into a plurality of groups based on a scannable area of the laser scanner; and a programming part for making a motion program for the robot and the laser scanner such that the laser scanner may scan all welding lines included in each of the plurality of groups while the robot is positioned within an area corresponding to the same group.

The programming part may make the motion program for the robot and the laser scanner such that the robot is temporarily stopped until the laser scanner scans all welding lines included in each of the plurality of groups. Alternatively, the programming part may make the motion program for the robot and the laser scanner such that the robot is moved at a constant speed while the laser scanner scans the welding lines.

Alternatively, the programming part may make the motion program for the robot and the laser scanner, using a function in relation to the position or the moving speed of the robot and an evaluation function therefor, for each of the plurality of groups, while the laser scanner scans the welding lines.

It is preferable that the grouping part classifies the plurality of welding lines based on the distance between each welding line.

The laser welding teaching device may further comprise a simulating part for executing an offline simulation based on the motion program for the robot and the laser scanner prior to the actual welding operation.

According to another aspect of the invention, there is provided a laser welding teaching method for making a motion program for a laser scanner and a robot in a laser welding system, the laser scanner being capable of controlling a irradiating direction of a laser beam and the robot being capable of changing the position and the orientation of the laser scanner mounted on the robot, the teaching method comprising steps of: indicating models of a workpiece to be welded and the laser scanner; specifying a plurality of welding lines on the model of the workpiece; classifying the plurality of welding lines into a plurality of groups based on a scannable area of the laser scanner; and making a motion program for the robot and the laser scanner such that the laser scanner may scan all welding lines included in each of the plurality of groups while the robot is positioned within an area corresponding to the same group.

The laser welding teaching method may further comprise a step of executing an offline simulation based on the motion program for the robot and the laser scanner, prior to the actual welding operation.

### BRIEF DESCRIPTION OF THE DRAWINGS

The above and other objects, features and advantages of the present invention will be made more apparent by the following description of the preferred embodiments thereof, with reference to the accompanying drawings, wherein:
Fig. 1 is a diagram showing a schematic configuration of a laser processing machine including a laser welding teaching device according to the invention;
Fig. 2 is a flowchart showing a general procedure of a teaching method according to the invention;
Fig. 3 is a flowchart detailing a modeling method in the flowchart of Fig. 2;
Fig. 4a is a diagram of a vehicle body as a workpiece indicated on a display;
Fig. 4b is an enlarged view of Fig. 4a indicating specified welding lines;
Fig. 4c is a diagram showing the welding lines classified into some groups;
Fig. 5 is an image on the display in which a robot is located near the workpiece;
Fig. 6 is a flowchart detailing a programming method in the flowchart of Fig. 2;
Fig. 7 is a diagram showing a positional relation between the workpiece and a scanner;
Fig. 8 is a diagram showing a center position of each operation surface;
Fig. 9 is a vector diagram for determining the motional direction of the scanner during the movement of TCP; and
Figs. 10a and 10b are diagrams showing constitutions of the teaching device and the robot control device of the invention.

### DETAILED DESCRIPTIONS

The present invention will be described below with reference to drawings.

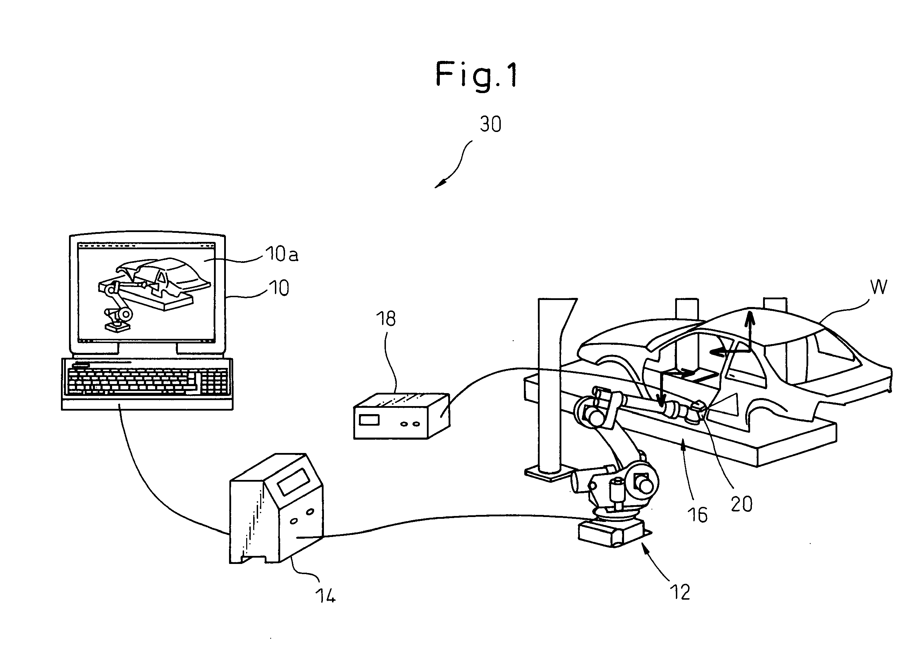

Fig. 1 is a diagram showing a schematic configuration of a laser processing machine 30 including a laser welding teaching device 10 according to the invention. The laser welding teaching device 10 is preferably a remote teaching device connected to a robot control device 14 for controlling a welding robot 12 for welding a workpiece W such as a vehicle body. The teaching device 10 may send various commands to the robot control device 14. A laser oscillator 18 is connected to a work tool 16 of the welding robot 12. Further, a laser scanner 20 is arranged on the work tool 16 for controlling the irradiating direction of the laser beam. The position and the orientation of the laser scanner 20 may be changed by the robot 12. As shown, the teaching device 10 may be a processing device such as a notebook computer provided with software having a feature as described below.

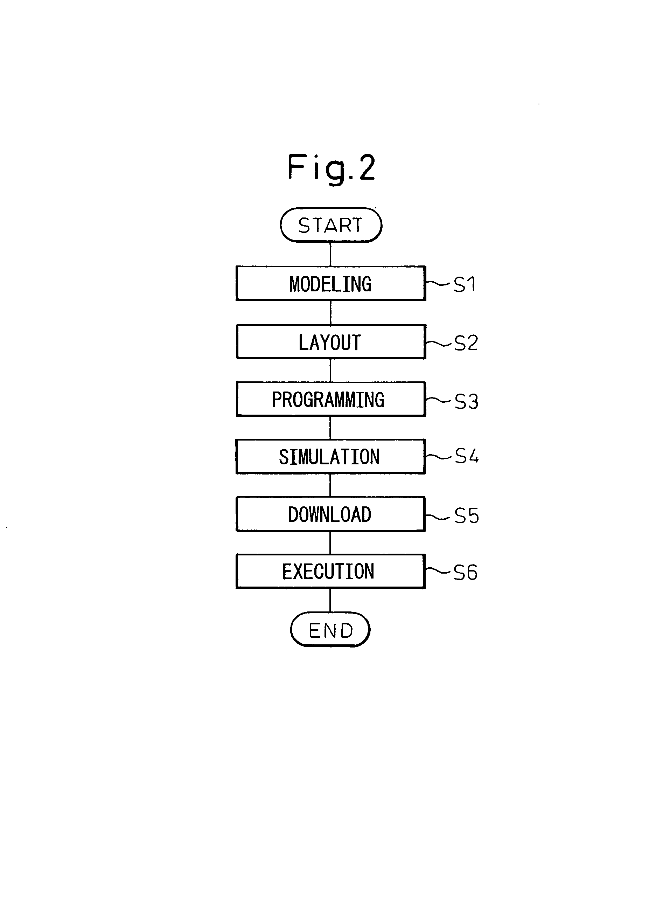

Fig. 2 is a flowchart showing a general procedure of a teaching operation or a teaching method executed by the laser welding teaching device 10 prior to the actual welding operation by the above laser processing machine 30. The details of the teaching operation are described below.

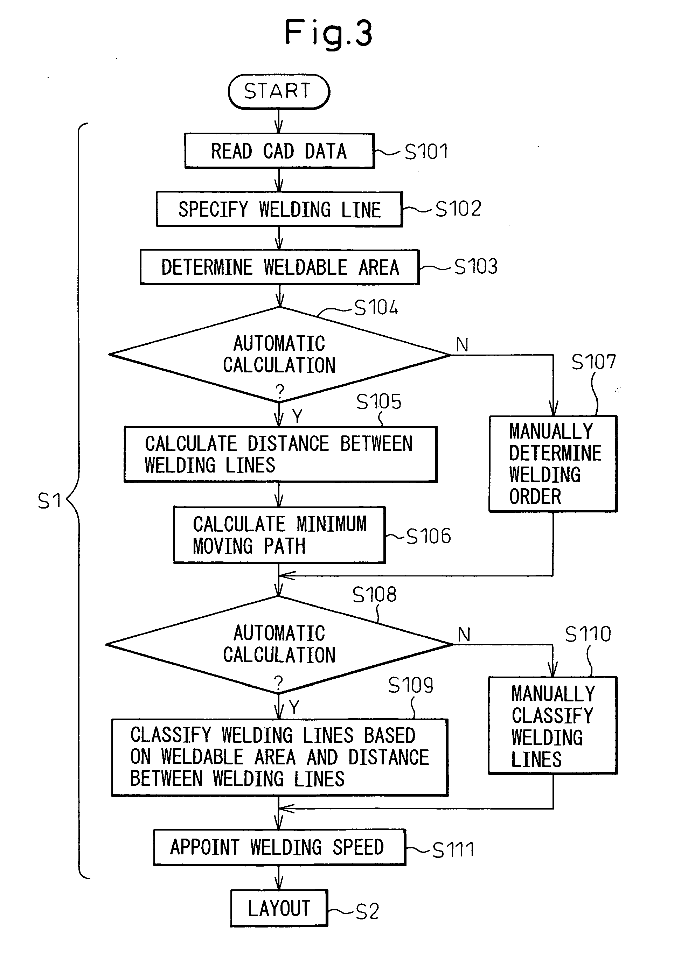

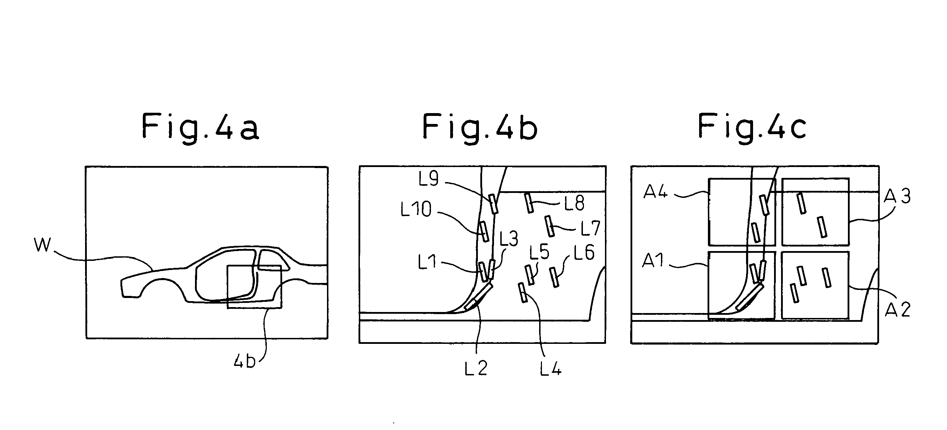

Fig. 3 is a flowchart detailing modeling process (S1) in the flowchart of Fig. 2. First, the teaching device 10 reads CAD data and IGES data of the workpiece W from a database (not shown) (step S101). At this point, the workpiece W is described as a vehicle body, as shown in Fig. 4a. Then, an operator specifies a plurality of sites or welding lines to be welded (ten welding lines in this case) (step S102). At this point, the teaching device 10 may indicate the workpiece W and the welding lines on a display 10a of the device 10 or another suitable display. In this case, it is assumed that all welding lines are positioned on or near a rear door of the vehicle body. Next, the operator determines a scannable area by means of the laser scanner 20 (i.e., an area capable of being welded in the actual welding) (step S103). This area means a scannable area by scanner 20 when a TCP of the robot 12 is within the area. For example, the size of the scannable area is approximately 200mm x 200mm. Step S103 may be omitted when data of the area capable of being welded is previously stored in a memory. In the modeling, a three-dimensional model is generally formed, in view of the depth of the workpiece or the welding depth. However, a planar or two-dimensional model is also possible.

Next, the order of welding the welding lines is determined. First, it is decided whether the order is to be manually or automatically determined (step S104). This decision is based on a value or the like which is previously and interactively inputted by the operator. When the order is automatically determined, each position of each welding line and each distance between each welding line (in particular, between the closest welding lines) are calculated (step S105). Further, as shown in Fig. 4b, for example, the order of the welding lines (L1 to L10) is determined such that the summation of the above distances between the welding lines is minimized when all of the welding lines are sequentially welded (step S106). When the order is manually determined, on the other hand, the operator inputs the order of the welding lines by operating a mouse or the like (step S107), preferably based on the same concept as that in case of automatic determination.

After that, the welding lines are classified into some groups. First, it is decided whether the classification is to be manually or automatically carried out (step S108). This decision is also based on a value or the like which is previously and interactively inputted by the operator. When the classification is automatically carried out, as shown in Fig. 4c, for example, based on the distances between the welding lines calculated in step S105 or newly calculated and the weldable area or the scannable area of the scanner 20 (e.g., a square of 200mm x 200mm) determined in step S103 or previously determined in another step, the welding lines L1 to L10 are classified into scannable areas such that the number of scannable areas each including one or more welding line is minimized (step S109). In this case, the welding lines are classified into four areas A1
- A4. When the order is manually determined, on the other hand, the operator inputs each scannable area and each welding line to be included therein by operating the mouse or the like (step S110), preferably based on the same concept as that in case of automatic classification.

In addition, the determination of the order for welding the welding lines (step S104 - S107) may be carried out after the classification of the welding lines (step S108 - S110). Finally, a welding speed is appointed in consideration of a total cycle time of the welding (step S111).

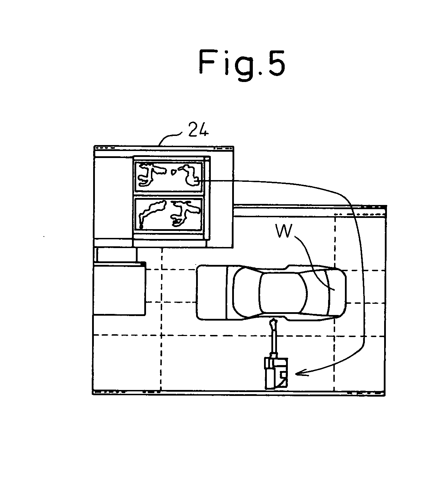

After the modeling process (S1) is completed, the teaching device 10 starts a layout process (S2) on the display. In this case, as shown in Fig. 5, images of the robot 12, the work tool 16 and other external equipment are read out from a library 24 and located at suitable places or around the workpiece W on the display.

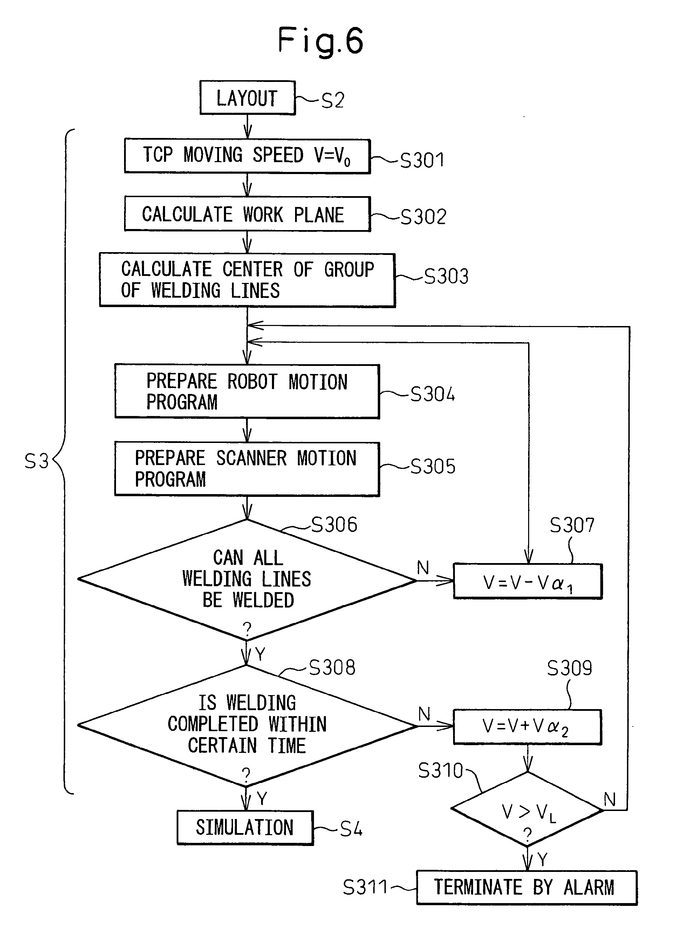

The teaching device 10 then makes a motion program (S3). In this case, the motion program for the robot 12 and the scanner 20 is made, based on the welding lines (L1 to L10), the welding order thereof and the welding speed calculated or inputted in the modeling process (S1). The details of the programming process (S3) are described below with reference to Fig. 6.

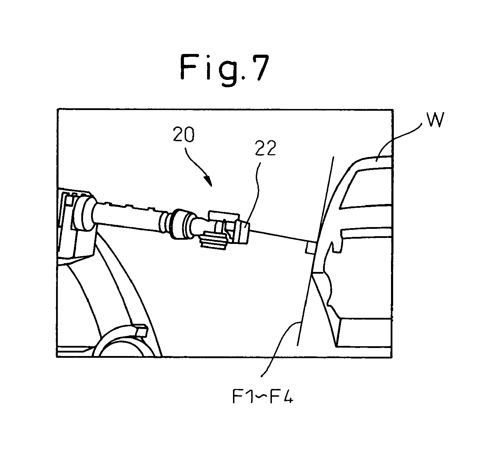

First, the moving speed V of a reference point or a TCP of the robot 12 is set to an initial value V₀ (step S301). The TCP in this case is, as shown in Fig. 7, a point at the intersection of a line extending from a certain point (e.g., the center point) on a mirror 22 of the scanner 20 with each of work planes F1 to F4 representing the above weldable areas A1 to A4, respectively, when the mirror 22 is positioned opposed to each work plane. However, another suitable point may be used as the TCP. Each work plane may be defined by approximating a surface (i.e., a curved surface, in general) near the welding line included in the corresponding weldable area by a flat surface (step S302). For example, the work plane F1 is defined by approximating a portion or a door frame of the vehicle body near the welding lines L1 to L3 included in the weldable area A1 by one flat surface.

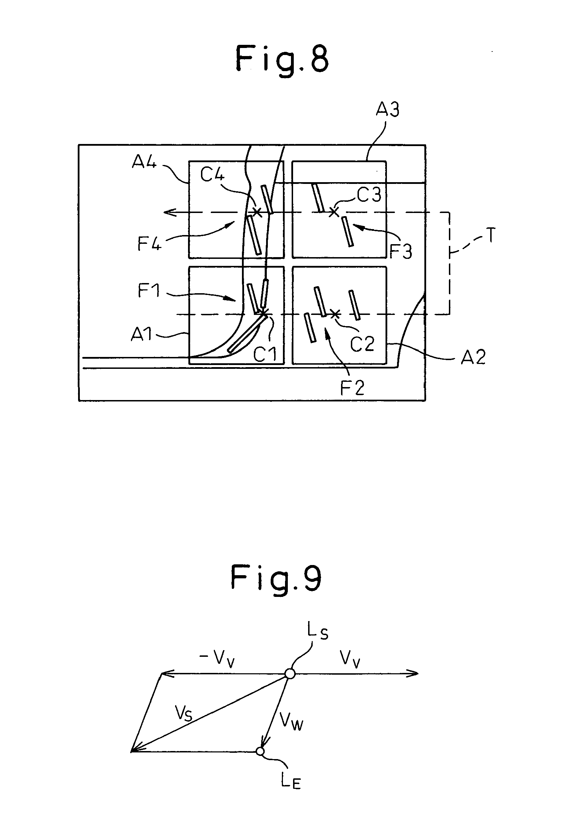

Next, as shown in Fig. 8, center positions C1 to C4 in the respective weldable areas A1 to A4 are determined (step S303). For example, the center position C1 in the area A1 is determined such that the summation of each distance between the center position C1 and one end of each welding line L1 to L3 is minimized.

Next, the motion program for defining the position and the orientation of the robot is prepared (step S304). Due to this program, as shown in Fig. 8, the TCP of the robot 12 may be moved along a trajectory T and, in particular, the TCP may sequentially pass through the center positions C1 to C4 determined in step S303 at a constant speed and thus may sequentially pass through the weldable areas A1 to A4. Succeedingly, based on the motion program for the robot, a motion program for defining the position and the orientation of the scanner such that a scanning line of the scanner 20 may pass through all welding lines at the above welding speed according to the welding order determined in the modeling process (S1) (step S305). For example, the position and the orientation of the laser scanner 20 are defined such that the scanner 20 may scan all of the welding lines A1 to A3 during the robot 12 is positioned corresponding to the weldable area A1 (or the TCP is within the area A1). As the TCP is moved at a constant speed, the movement of the scanner 20 may be represented by a composition vector V_{S} as shown in Fig. 9. The vector V_{S} may be obtained by a vector -Vᵥ opposed to a vector Vᵥ representing the movement of the TCP and a vector V_{W} extending from a welding start point L_{S} to a welding end point L_{E}.

Next, it is judged whether all welding lines included in each work plane may be welded (in other words, whether the moving speed of the TCP is too fast to weld all welding lines), when the motion program for the robot and the scanner prepared in steps S304 and S305 is executed (step S306). If one or more welding line cannot be welded, the process progresses to step S307 to reduce the moving speed V of the TCP by a suitable step value V_{α1}. Then, the motion program is prepared again based on the reduced moving speed in step S304. On the other hand, when all welding lines can be welded in each work plane, the process progresses to step S308.

In step S308, it is judged whether the welding of all welding lines may be completed in a predetermined cycle time (in other words, whether the moving speed of the TCP is too low). When all welding lines can be welded in the predetermined cycle, the programming process (S3) is terminated. Otherwise, the process progresses to step S309 to increase the moving speed V of the TCP by a step value V_{α2}. This step value is preferably lower than the above step value V_{α1} so as to stabilize the convergence of the programming process. On this point, if the value (V + V_{α2}) is larger than a limit speed V_{L} which may be separately calculated based on the specification of the robot and/or the scanner (step S310), an alarm or the like is given to indicate "No Solution" (S311) and the whole process shown in Fig. 2 is forcibly terminated. In this case, therefore, it is necessary to try the above grouping of the welding lines again. On the other hand, if the value (V + V_{α2}) is not larger than the above limit speed, the motion program for the robot is prepared again in step S304, based on the calculated or increased speed V.

Instead of steps S306 to S311, a programming method may be used, in which the motion of the robot is evaluated by an evaluation function and the moving speed of the robot may be changed, if required, so as to fill the condition of the evaluation program. By the evaluation function, it may be judged that the movement of the robot, according to a specific function in relation to the position on the welding line or the moving speed, is carried out within a certain cycle time.

After the motion program for the robot and the scanner is prepared, the teaching device 10 executes an off-line simulation based on the motion program (S4). In the simulation, the operation of the robot is checked.

Next, the motion program is downloaded (S5). In other words, the motion program for the robot and the scanner is outputted to the robot control device 14 from the teaching device 10.

By the above processes S1 to S5, the robot welding is ready to be started. The robot control device 14 executes the motion program for the robot and the scanner downloaded from the teaching device 10 to achieve remote welding (S6).

According to the teaching device of the invention, each welding line may be scanned by the high-speed movement of the scanner during the constant-speed movement of the TCP of the robot. Therefore, the air cut motion between the sites to be welded, as in prior art, may be substantially eliminated, whereby a total cycle time of the welding may be considerably reduced in comparison to the conventional welding operation. In a welding method using a laser scanner, as the scanner and the robot are simultaneously moved, to reduce the welding time, control considering the combined motion of the robot and the scanner is necessary. This control may be very difficult indeed and, therefore, the teaching operation during the actual welding may take a long time through a trial and error process. On the contrary, in the present invention, the motion program for the robot and the scanner is previously prepared off-line and the operability of the program is checked by a simulation. Therefore, a trial and error process is not necessary in the actual welding operation. Also in view of this, the cycle time may be reduced and the reliability of the operation may be improved.

In the above embodiment, each welding line may be scanned during the TCP is moved at the constant speed V over the whole welding operation. However, it is also possible to repeat an operation, in which one or more welding lines in a work plane (or a weldable area) is scanned while the TCP is stopped at or near the center of the work plane and, the TCP is moved to or near the center of a succeeding work plane after the welding of all welding lines in the preceding work plane is completed. Also in this case, the air cut motion may be quickly carried out by combining the motion of the robot with the high-speed motion of the scanner obtained by the rotation of a mirror, whereby the cycle time may be reduced. Further, as a composition vector obtained by combining the motions of the robot and the scanner does not need to be considered, this case is more suitable for an operation requiring high accuracy than the above case.

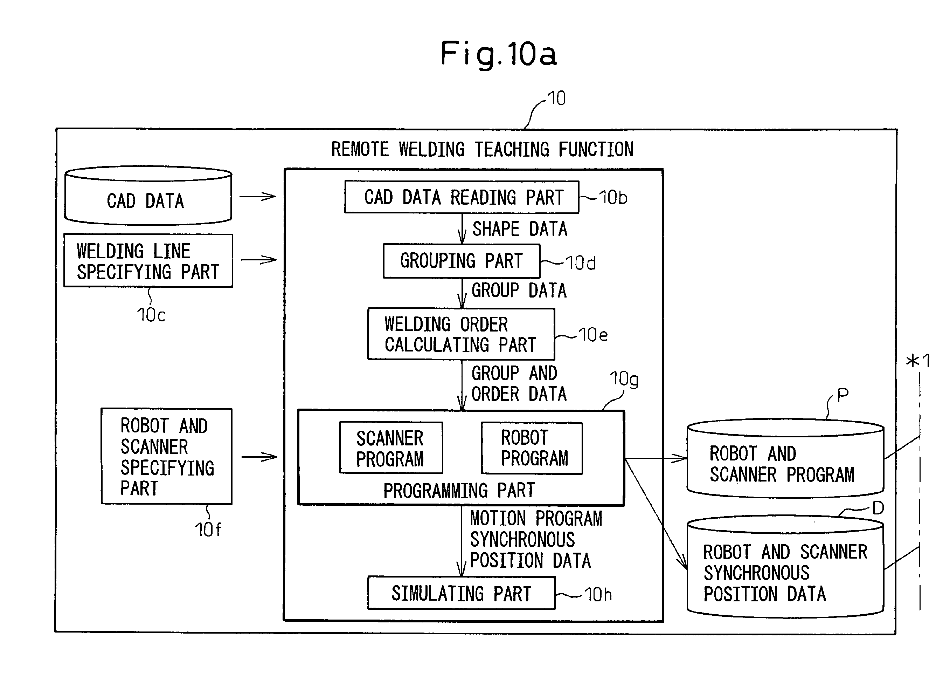

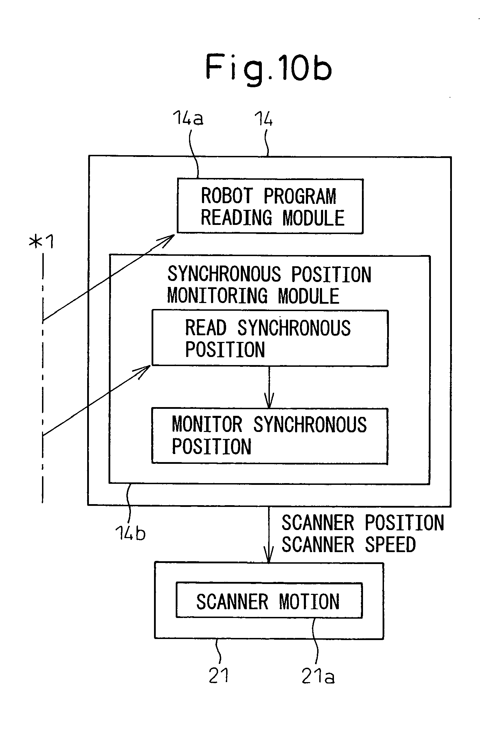

Fig. 10a shows a preferred software constitution of the laser welding teaching device 10 (or the personal computer in the above embodiment) according to the invention. The personal computer 10 includes, as a remote welding function, a reading part 10b for reading CAD data (s101), a grouping part 10d for classifying the welding lines specified by a welding line specifying part 10c (S109), a welding order calculating part 10e for calculating the welding order (S105, S106), a programming part 10g for making a motion program for the robot and the laser scanner specified by a robot and scanner specifying part 10f (step S304, S305), and a simulating part 10h for executing an off-line simulation (S4). A prepared motion program P for the robot and the scanner is sent to the robot control device 14, along with synchronous position data D of the robot and the scanner simultaneously prepared by the programming part 10g. As shown in Fig. 10b, the robot control device 14 includes a program reading module 14a for reading the motion program P and a synchronous position monitoring module 14b for reading the synchronous data D and for monitoring the synchronous position. Further, the robot control device 14 sends speed data and position data of the scanner (or start and end positions of each welding line) to a scanner controller 21 having a scanner motion module 21a, whereby a suitable motion of the scanner may be achieved.

According to the present invention, the motion of the robot during the air cut motion may be greatly reduced by moving the scanner capable of moving at high speed, instead of by moving the TCP. Therefore, the cycle time of the whole system may be considerably reduced. Further, the teaching operation in relation to the motion program for the robot and the scanner may be simplified by preparing the program in off-line.

While the invention has been described with reference to specific embodiments chosen for the purpose of illustration, it should be apparent that numerous modifications could be made thereto, by one skilled in the art, without departing from the basic concept and scope of the invention.

## Claims

1. A laser welding teaching device (10) for making a motion program for a laser scanner (20) and a robot (12) in a laser welding system (30), the laser scanner (20) being capable of controlling a irradiating direction of a laser beam and the robot (12) being capable of changing the position and the orientation of the laser scanner (20) mounted on the robot (12), **characterized in that** the teaching device comprises:
a displaying part (10a) for indicating models of a workpiece (W) to be welded and the laser scanner (20);
a welding line specifying part (10c) for specifying a plurality of welding lines (L1-L10) on the model of the workpiece (W);
a grouping part (10d) for classifying the plurality of welding lines (L1-L10) into a plurality of groups (A1-A4) based on a scannable area of the laser scanner (20); and
a programming part (10g) for making a motion program for the robot (12) and the laser scanner (20) such that the laser scanner (20) may scan all welding lines included in each of the plurality of groups (A1-A4) while the robot (12) is positioned within an area corresponding to the same group.

2. The laser welding teaching device as set forth in claim 1, wherein the programming part (10g) makes the motion program for the robot (12) and the laser scanner (20) such that the robot (12) is temporarily stopped until the laser scanner (20) scans all welding lines included in each of the plurality of groups (A1-A4).

3. The laser welding teaching device as set forth in claim 1, wherein the programming part (10g) makes the motion program for the robot (12) and the laser scanner (20) such that the robot (12) is moved at a constant speed while the laser scanner (20) scans the welding lines (L1-L10).

4. The laser welding teaching device as set forth in claim 1, wherein the programming part (10g) makes the motion program for the robot (12) and the laser scanner (20), using a function in relation to the position or the moving speed of the robot (12) and an evaluation function therefor, for each of the plurality of groups (A1-A4), while the laser scanner (20) scans the welding lines (L1-L10).

5. The laser welding teaching device as set forth in claim 1, wherein the grouping part (10d) classifies the plurality of welding lines (L1-L10) based on the distance between each welding line.

6. The laser welding teaching device as set forth in claim 1, further comprising a simulating part (10h) for executing an offline simulation based on the motion program for the robot (12) and the laser scanner (20) prior to the actual welding operation.

7. A laser welding teaching method for making a motion program for a laser scanner (20) and a robot (12) in a laser welding system (30), the laser scanner (20) being capable of controlling a irradiating direction of a laser beam and the robot (12) being capable of changing the position and the orientation of the laser scanner (20) mounted on the robot (12), the teaching method comprising steps of:
indicating models of a workpiece (W) to be welded and the laser scanner (20);
specifying a plurality of welding lines (L1-L10) on the model of the workpiece (W);
classifying the plurality of welding lines (L1-L10) into a plurality of groups (A1-A4) based on a scannable area of the laser scanner (20); and
making a motion program for the robot (12) and the laser scanner (20) such that the laser scanner (20) may scan all welding lines included in each of the plurality of groups (A1-A4) while the robot (12) is positioned within an area corresponding to the same group.

8. The laser welding teaching method as set forth in claim 7, further comprising a step of executing an offline simulation based on the motion program for the robot (12) and the laser scanner (20), prior to the actual welding operation.
